# EUROPEAN PATENT APPLICATION

(11) **EP 1 981 299 A1**
(43) Date of publication of application: **15.10.2008**
(21) Application number: 06712990.8
(22) Date of filing: 03.02.2006
(51) Int. Cl.: H04Q 7/38

(54) **COMMUNICATION APPARATUS, RADIO COMMUNICATION SYSTEM AND RADIO COMMUNICATION METHOD**

(71) Applicant: MITSUBISHI DENKI KABUSHIKI KAISHA, Chiyoda-ku Tokyo 100-8310 (JP)
(72) Inventor: FUKUI, Noriyuki, Tokyo 100-8310 (JP)
(74) Representative: Zech, Stefan Markus
(86) International application number: PCT/JP2006/301847
(87) International publication number: WO 2007/088629

(57) **Abstract**

A communication apparatus according to the present invention is for use in a radio communication system having plural communication channels on a frequency domain. The communication apparatus includes an ACK/NACK generating unit (23) that generates an ACK or a NACK based on a result of decoding of a received signal; a quality-information organizing unit (22) that accumulates a channel quality obtained by a predetermined measuring process, of each of the communication channels, and outputs a CQI in timing of an ACK or an NACK output by the ACK/NACK generating unit (23); and a transmitting unit (signal multiplexing unit (24) and modulating/transmitting unit (25)) that receives a CQI from the quality-information organizing unit (22) and receives an ACK or an NACK from the ACK/NACK generating unit (23), and transmits the CQI and the ACK or the NACK through same communication channel.

## Description

### TECHNICAL FIELD

The present invention relates to a communication apparatus and a radio communication method for establishing communications using an assigned communication channel in a radio communication system that has plural communication channels on a frequency domain, and, more particularly to a communication apparatus that provides a CQI (Channel Quality Indicator).

### BACKGROUND ART

For example, Nonpatent Literature 1, which is mentioned below, discloses a format of a HS-DPCCH (High Speed-Dedicated Physical Control CHannel) of a physical layer channel, in which a CQI indicating channel quality information, and an ACK or a NACK relating to retransmission are set. This technology employs a radio system called WCDMA (Wideband Code Division Multiple Access).

In the WCDMA, only one communication channel is defined on the frequency domain. Therefore, a terminal measures the quality of the channel on a downlink (from a base station to a terminal), sets the result of the measurement in a CQI field, and reports the CQI field to the base station. Such reporting is repeated at a predetermined period, and this period is decided by a control station of a radio access network to which the base station is connected.

When data is transmitted from the base station to the terminal, the terminal returns an ACK if a result of decoding of the data indicates successful reception, or an NACK if the reception is unsuccessful. The return of an ACK or an NACK and the reporting of the CQI are performed independently. Therefore, in the HS-DPCCH, there are cases of returning only the ACK or the NACK, returning only the CQI, returning both of the ACK or the NACK and the CQI, and returning neither.

Meanwhile, currently, according to a 3GPP, a radio network adopting a new radio system is studied on an LTE (Long Term Evolution). The studied new radio system defines plural communication channels on a frequency domain, and selects a channel on the frequency domain to be used for communication according to the quality (base station scheduling). Specifically, a system frequency band is divided into many frequency groups #1 to #n, and scheduling is performed in units of sub-frames in a direction of a time domain, thereby selecting a terminal to be assigned to each of the frequency groups for each period of the subframe. That is, in assignment of frequency groups to a terminal #1, a frequency group having the highest channel quality, for example a frequency group #1 is assigned first. In the next period, according to the latest channel quality, a frequency group having the highest quality at that time, for example a frequency group #2 is assigned.

In the above conventional technology in which there are plural communication channels on the frequency domain, a communication channel among them, having as high a quality as possible is selected and assigned to each terminal.

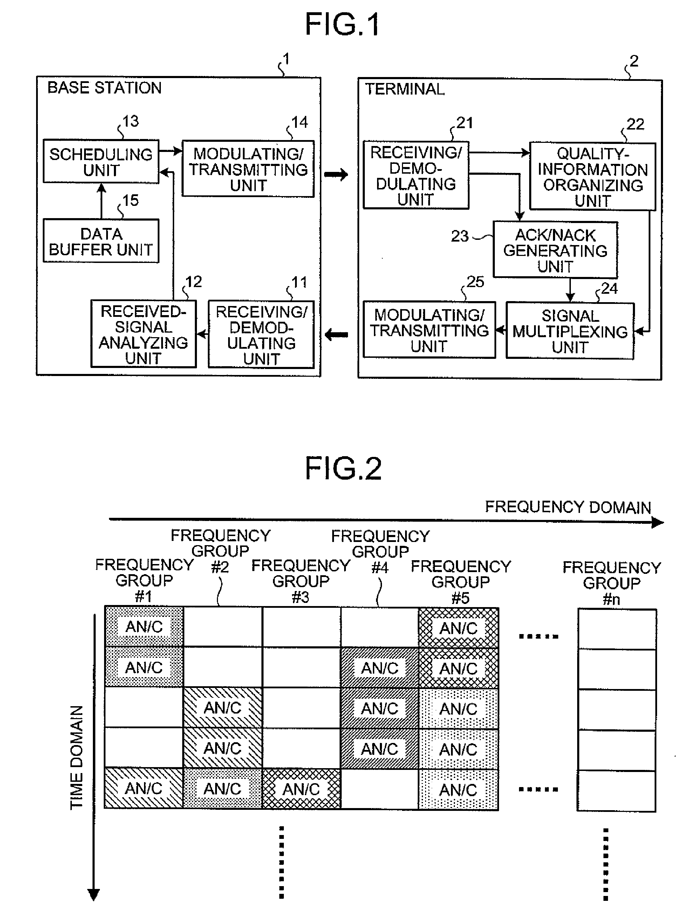

Nonpatent Literature 1: 3GPP, TS25.211, V6.6.0, Section 5.2.1.2, Figure 2A

### DISCLOSURE OF INVENTION

### PROBLEM TO BE SOLVED BY THE INVENTION

In the above conventional technology, because there are plural channels that can be assigned, a communication apparatus (i.e., a base station) performing scheduling must know the channel quality of each channel. However, the channel quality changes constantly so that each communication apparatus (corresponding to a terminal) that establishes desired communications must periodically report the channel quality even when the channel has not changed. When data is transmitted from the base station, the terminal needs to return an ACK or an NACK according to a result of decoding of the data. Therefore, when the return of an ACK or an NACK and the report of the CQI are separately performed independently according to the above conventional method, these two elements may occupy many of the communication channels.

The present invention has been achieved in view of the above problem, and it is an object of the present invention to provide a communication apparatus, a radio communication system, and a radio communication method for reducing occupancy of the communication channels by an ACK or an NACK or the report of a CQI.

### MEANS FOR SOLVING PROBLEM

To solve the above problem and to achieve the above object, a communication apparatus according to the present invention is for use in a radio communication system having plural communication channels on a frequency domain. The communication apparatus includes an ACK/NACK generating unit that generates an ACK or a NACK based on a result of decoding of a received signal; a quality-information organizing unit that accumulates a channel quality obtained by a predetermined measuring process, of each of the communication channels, and outputs a CQI in timing of an ACK or an NACK output by the ACK/NACK generating unit; and a transmitting unit that receives a CQI from the quality-information organizing unit and receives an ACK or an NACK from the ACK/NACK generating unit, and transmits the CQI and the ACK or the NACK through same communication channel.

### EFFECT OF THE INVENTION

With the present invention, occupancy of the communication channels can be reduced, and therefore there is an effect that radio resources can be effectively utilized.

### BRIEF DESCRIPTION OF DRAWINGS

[Fig. 1] Fig. 1 is an example of a configuration of a radio communication system according to the present invention.
[Fig. 2] Fig. 2 depicts a manner in which each of terminals returns an ACK or an NACK, and a CQI through the same channel in the radio communication system shown in Fig. 1.
[Fig. 3] Fig. 3 depicts a manner of CQI reporting according to the first embodiment.
[Fig. 4] Fig. 4 depicts a manner of CQI reporting according to a second embodiment.
[Fig. 5] Fig. 5 depicts a manner of CQI reporting according to a third embodiment.
[Fig. 6] Fig. 6 depicts a manner of CQI reporting according to a fourth embodiment.

### EXPLANATIONS OF LETTERS OR NUMERALS

- 1: base station
- 2: terminal
- 11: receiving/demodulating unit
- 12: received-signal analyzing unit
- 13: scheduling unit
- 14: modulating/transmitting unit
- 15: data buffer unit
- 21: receiving/demodulating unit
- 22: quality-information organizing unit
- 23: ACK/NACK generating unit
- 24: signal multiplexing unit
- 25: modulating/transmitting unit

### BEST MODE(S) FOR CARRYING OUT THE INVENTION

Exemplary embodiments of a communication apparatus, a radio communication system, and a radio communication method according to the present invention will be explained below in detail with reference to the accompanying drawings.

### First embodiment.

Fig. 1 is an example of a configuration of a radio communication system according to the present invention. The radio communication system includes, for example, a base station 1, and a plurality of terminals (although only one terminal 2 is shown in Fig. 1 as an example) each being under control of the base station 1. The base station 1 includes a receiving/demodulating unit 11, a received-signal analyzing unit 12, a scheduling unit 13, a modulating/transmitting unit 14, and a data buffer unit 15. The terminal 2 includes a receiving/demodulating unit 21, a quality-information organizing unit 22, an ACK/NACK generating unit 23, a signal multiplexing unit 24, and a modulating/transmitting unit 25.

Fig. 2 depicts how five terminals in the communication system return an ACK or an NACK and a CQI through the same channels (the same frequency groups). A system frequency band is divided into many frequency groups from #1 to #n. The base station 1 performs scheduling in units of sub-frames in a direction of a time domain. In Fig. 2 the channels (frequency groups) assigned to the respective terminals are represented by different hatchings.

In the example shown in Fig. 2, channel assignment is performed according to a method of previously relating channels to be assigned to data transmission and channels to be assigned to return of an ACK or an NACK (ACK or NACK return), a method of reassigning channels for an ACK or an NACK return (ACK/NACK returning channels) regardless of channels assigned to data transmission, and the like. In either method, each terminal reports a CQI using the ACK/NACK returning channel. Accordingly, unoccupied channels that can be used for data transmission can be increased as compared to the conventional technology. The 3GPP does not specify a method of assigning channels to be used for return of the ACK or the NACK.

An outline of an operation of the communication system according to the first embodiment is explained next in detail with reference to Fig. 1. In the terminal 2, the receiving/demodulating unit 21 periodically receives a pilot signal from the base station 1, measures a channel quality based on the received pilot signal, and outputs the channel quality (such as a level of the received signal) to the quality-information organizing unit 22. The quality-information organizing unit 22 accumulates the channel quality information that it receives periodically. At this time, an average of the information received during a given time period can be calculated.

Further, the receiving/demodulating unit 21 sometimes receives data dedicated to the terminal 2 itself. In such cases, the receiving/demodulating unit 21 outputs a result of decoding of the data to the ACK/NACK generating unit 23. The ACK/NACK generating unit 23 generates an ACK (in the case of a successful reception) or an NACK (in the case of an unsuccessful reception) based on the received result of the decoding. The quality-information organizing unit 22 outputs a CQI at a timing at which an ACK or a NACK is output by the ACK/NACK generating unit 23.

The signal multiplexing unit 24 multiplexes a CQI received from the quality-information organizing unit 22 and an ACK or an NACK received from the ACK/NACK generating unit 23, and outputs a multiplexed signal to the modulating/transmitting unit 25. The modulating/transmitting unit 25 transmits the received multiplexed signal (including the CQI and the ACK or the NACK) to the base station 1 as a radio signal.

In the base station 1, the receiving/demodulating unit 11 demodulates the received signal, and outputs a demodulated signal to the received-signal analyzing unit 12. The received-signal analyzing unit 12 demultiplexes the demodulated signal into the original CQI, the ACK or the NACK, and other signals, identifies the demultiplexed signals, and outputs the CQI and information relating to the ACK or the NACK (ACK/NACK information) to the scheduling unit 13.

Based on the obtained CQI the scheduling unit 13 selects a channel (frequency group) to which the data to be transmitted is assigned, and specifies an appropriate modulation method and error correcting redundancy. The scheduling unit 13 determines whether new data is to be transmitted or retransmission data is to be transmitted, based on the obtained ACK/NACK information. The scheduling unit 13 outputs information about the selected channel, the modulation method, and the error correcting coding rate, together with the transmission data, to the modulating/transmitting unit 14. The modulating/transmitting unit 14 performs predetermined error correction coding and modulation to the data, and transmits resultant data to the terminal as a radio signal. Pilot signals are appropriately inserted into the channel through which the data is transmitted, and channels used for other purposes. The data buffer unit 15 buffers data for each terminal, arriving from upper layers.

With the present embodiment the channel assigned to the return of an ACK or an NACK can be used also for the report of a CQI, thereby increasing unoccupied channels. Accordingly, radio resource can be effectively utilized.

The fact that an ACK or an NACK is returned from a terminal implies that a possibility exists that data is transmitted again to that terminal. Therefore, it is an effective approach to report a CQI using a channel through which an ACK/NACK was returned. However, data transmission in some terminals may be resumed after data transmission has not been performed from those terminals for a given time period. Such terminals must previously report a CQI. Accordingly, a terminal that has not returned an ACK or an NACK for a given time period, i.e., a terminal that has not had a chance to report a CQI, provides a CQI report regardless of whether an ACK or an NACK was returned. A channel that is common to all terminals and is assigned to a random access can be used for the CQI reporting. Alternatively, a channel assigned to data transmission from a terminal to the base station can be temporarily used.

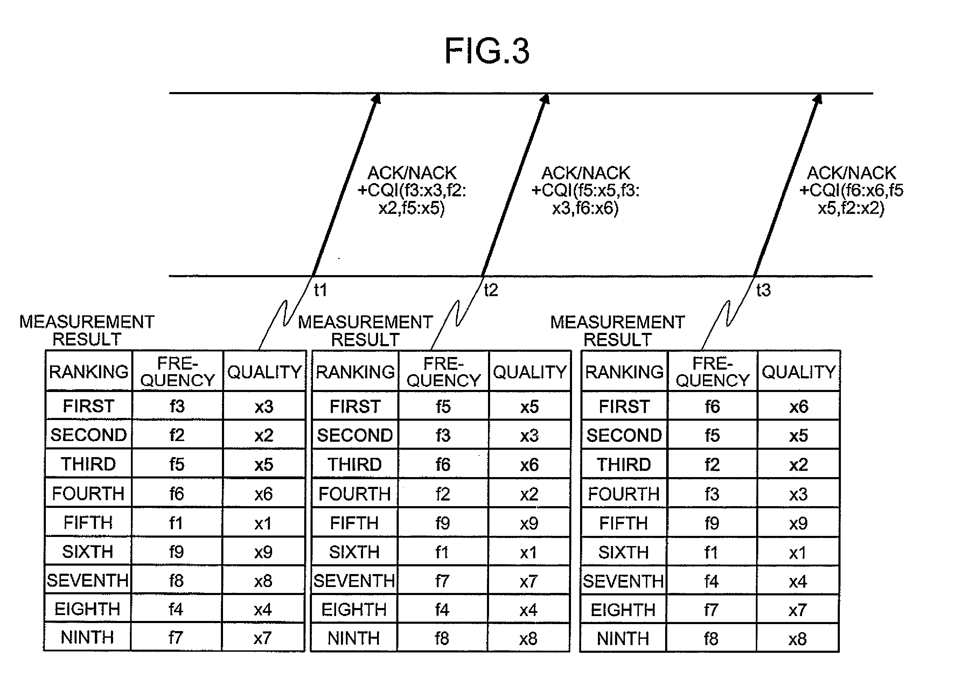

Details of a report when a CQI is reported together with an ACK or an NACK are explained below. Fig. 3 depicts how a CQI is reported in the first embodiment. In the example shown in Fig. 3, a CQI is reported at times t1, t2, and t3, respectively, together with an ACK or an NACK. At each reporting time, N (N is an arbitrary natural number: N=3 in Fig. 3) frequency groups having higher channel qualities are reported. Specifically, at the time t1, frequency group IDs of frequency groups f3, f2, and f5, and qualities x3, x2, and x5 thereof are reported. Similarly, frequency groups (f5, f3, and f6) and qualities (x5, x3, and x6) are reported at the time t2, and frequency groups (f6, f5, and f2) and qualities (x6, x5, and x2) are reported at the time t3. The quality-information organizing unit 22 performs a process of organizing the order of channel qualities.

As described above, in the present embodiment, when reporting a CQI, always only N frequency groups having higher channel qualities are reported. Thus, a data amount of one CQI report can be reduced. A scheduler (i.e., the scheduling unit 13) that receives the CQI report and selects a channel for data transmission always selects a channel having a satisfactory channel quality and that can transmit the maximum amount of data. Therefore, the CQI reporting method according to the present embodiment has compatibility with the scheduling method.

### Second embodiment.

An operation according to a second embodiment is explained next. A configuration of a radio communication system, and a manner in which a terminal returns an ACK or an NACK and a CQI through the same channel according to the second embodiment are the same as those described with reference to Figs. 1 and 2. Processes that are performed in a different manner from that in the first embodiment are only explained below.

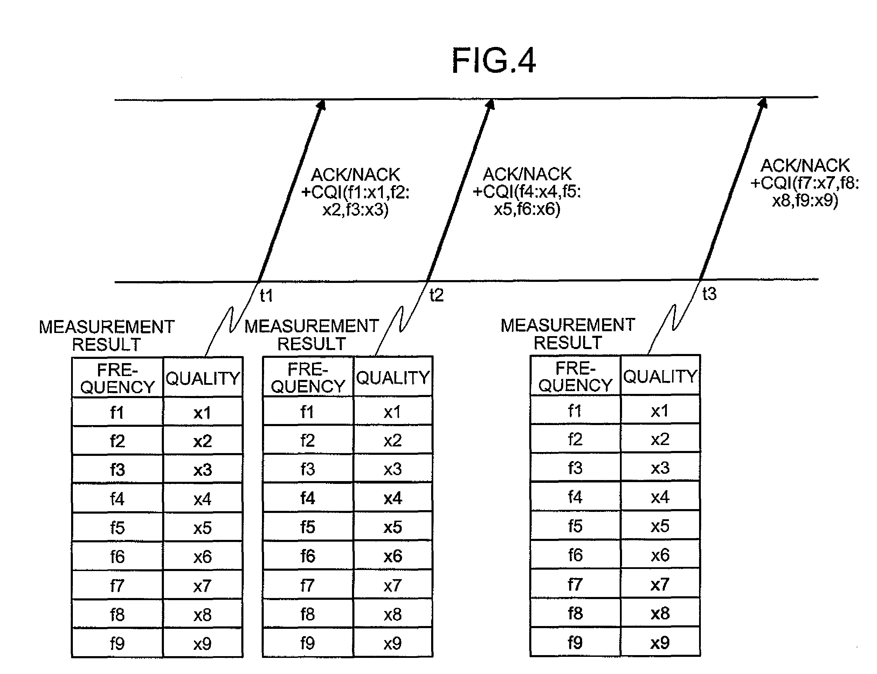

Fig. 4 depicts how a CQI is reported in the second embodiment. According to the present embodiment, N frequency groups among target frequency groups are reported in one CQI report. According to the present embodiment, a CQI report of N different frequency groups is repeatedly provided, resulting in CQI reporting of all the frequency groups to be reported by plural times of the reports. Fig. 4 is an example for N=3. At the time t1, frequency group IDs of frequency groups f1, f2, and f3, and qualities x1, x2, and x3 thereof are reported. Similarly, frequency groups (f4, f5, and f6) and qualities (x4, x5, and x6) are reported at the time t2, and frequency groups (f7, f8, and f9) and qualities (x7, x8, and x9) are reported at the time t3. When the order of frequency groups to be reported and the number of reports are specified as above, there is no need to inform of all frequency group IDs. Only the first frequency group ID can be informed at each report. For example, the frequency group f1 and the qualities (x1, x2, and x3) are reported at the time t1, the frequency group f4 and the qualities (x4, x5, and x6) are reported at the time t2, and the frequency group f7 and qualities (x7, x8, and x9) are reported at the time t3. The quality-information organizing unit 22 performs a process of changing the channel qualities to be reported at each time.

Thus, in the present embodiment, the CQI reporting of all the frequency groups to be reported is performed in plural batches. Thus, a data amount of one CQI report can be reduced. This invention is particularly effective in environments in which it takes time to report channel qualities of all frequency groups to the scheduler (corresponding to the scheduling unit 13), while the terminal has a low movement speed and the channel qualities change slowly.

### Third embodiment.

An operation according to a third embodiment is explained next. A configuration of a radio communication system, and a manner in which a terminal returns an NACK and a CQI through the same channel according to the third embodiment are the same as those described with reference to Figs. 1 and 2. Processes that are performed in a different manner from that in the first embodiment are only explained below.

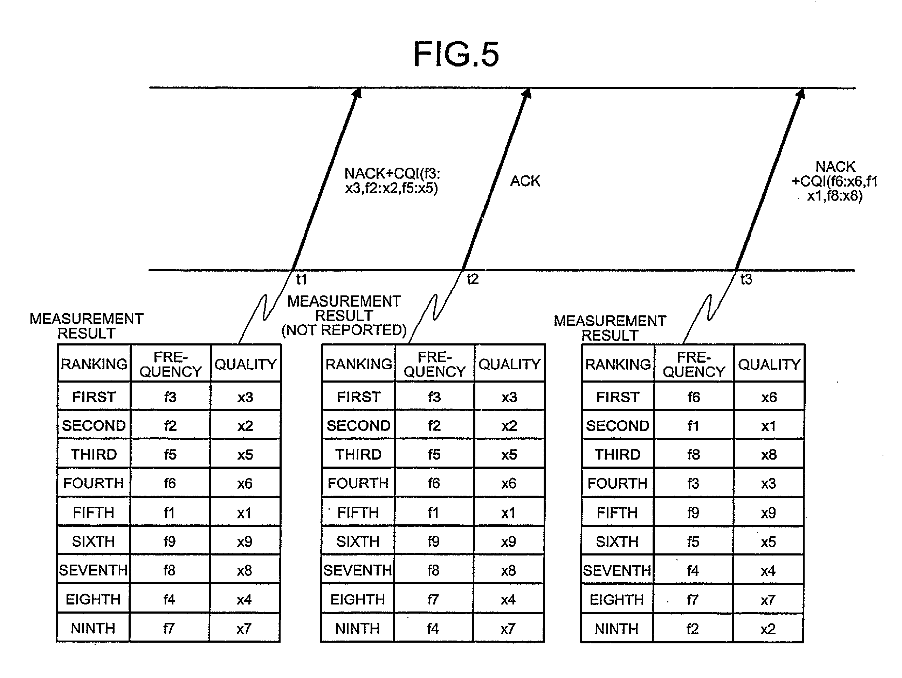

Fig. 5 depicts how a CQI is reported in the third embodiment. According to the present embodiment, N frequency groups having higher channel qualities among target frequency groups are reported in one CQI report. According to the present embodiment, no CQI report is provided when an ACK is returned, and a CQI report is provided only when an NACK is returned. Fig. 5 is an example for N=3. An NACK is returned at the time t1. Accordingly, frequency group IDs of frequency groups f3, f2, and f5 having higher channel qualities, and qualities x3, x2, and x5 thereof are reported simultaneously with the NACK. Then, an ACK is returned at the time t2 so that no CQI report is provided. Then, an NACK is returned again at the time t3. Accordingly, frequency groups (f6, f1, and f8) having higher channel qualities at that time, and qualities (x6, x1, and x8) thereof are reported. The quality-information organizing unit 22 performs a process of organizing the order of the channel qualities and a process of determining an ACK or an NACK. For example, the quality-information organizing unit 22 detects a trigger of NACK transmission from the ACK/NACK generating unit 23 (corresponding to the process of determining an ACK or an NACK), and outputs a CQI only when a trigger is detected.

Thus, in the present embodiment, a CQI report is provided through the same channel as an NACK. Accordingly, a data amount of the CQI report can be reduced more than that of the first embodiment. The scheduler (i.e., the scheduling unit 13) can be informed that selection of a channel used for data transmission is inappropriate, or the modulation method or the error correcting coding rate during use of the selected channel is inappropriate. Because the CQI report is not provided when an ACK is returned, the corresponding field can be used for other purposes. For example, an unused field can be used to further encode the ACK, thereby reducing an error rate of the ACK.

### Fourth embodiment.

An operation according to a fourth embodiment is explained next. A configuration of a radio communication system, and a manner in which a terminal returns an ACK or an NACK and a CQI through the same channel according to the fourth embodiment are the same as those described with reference to Figs. 1 and 2. Processes that are performed in a different manner from that in the first embodiment are only explained below.

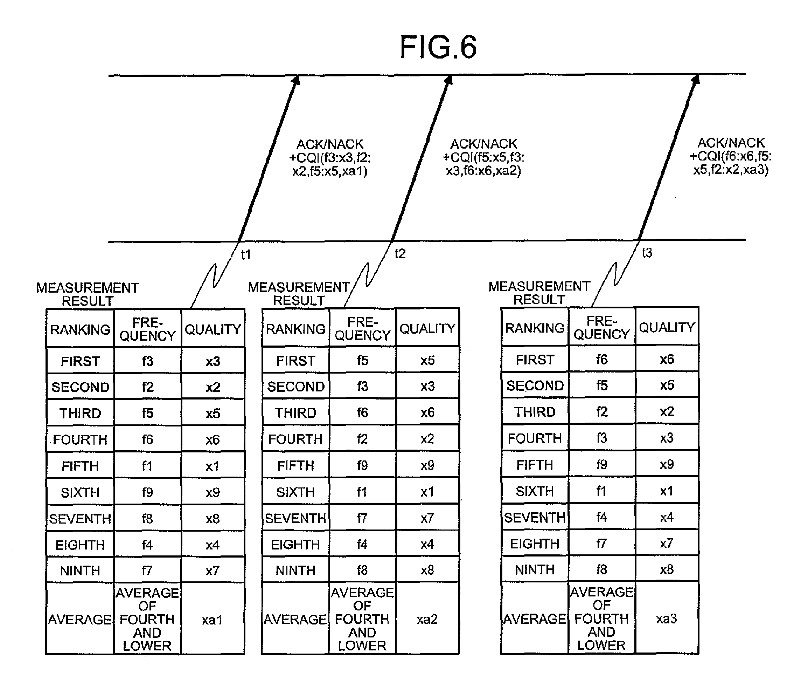

Fig. 6 depicts how a CQI is reported in the fourth embodiment. According to the present embodiment, N frequency groups having higher channel qualities among target frequency groups, and an average of qualities of other frequency groups are reported in one CQI report. Fig. 6 is an example for N=3. At the time t1, frequency group IDs of frequency groups f3, f2, and f5, and qualities x3, x2, and x5 thereof are reported. An average quality xa1 of frequency groups f1, f4, and f6 to f9 is also reported. Similarly, frequency groups (f5, f3, and f6) and qualities (x5, x3, and x6), and an average quality xa2 of frequency groups f1, f2, f4, and f7 to f9 are reported at the time t2. Frequency groups (f6, f5, and f2) and qualities (x6, x5, and x2), and an average quality xa3 of frequency groups f1, f3, f4, and f7 to f9 are reported at the time t3. The quality-information organizing unit 22 performs a process of calculating the average quality.

Thus, in the present embodiment, when reporting an CQI, N frequency groups having higher channel qualities and an average quality of frequency groups having qualities equal to and lower than that of an (N+1)th frequency group are reported. Thus, when the scheduler wants to use (N+1) frequency groups or more, an appropriate modulation method or error correcting coding rate can be defined more easily as compared to a case that there is no latest quality information relating to the (N+1)th frequency group and frequency groups having lower qualities. Accordingly, an increase in a data reception probability is expected. In the above description, frequency groups that have been individually reported are eliminated from targets of the quality averaging. However, these frequency groups can be included in the targets of the quality averaging.

In the first to fourth embodiments, the explanations have been given based on the CQI reporting using the same channel as the ACK/NACK returning channel. However, a method of always providing a CQI report with respect to N frequency groups having higher channel qualities, or a method of providing a CQI report with respect to all frequency groups to be reported in plural branches is not affected by a channel that is used to provide a report. Accordingly, the present invention can be applied also to a case that an independent channel is used for CQI reporting.

### INDUSTRIAL APPLICABILITY

The communication apparatus according to the present invention is effective in a radio communication system having plural communication channels on a frequency domain, and is particularly suitable for a communication apparatus that provides a CQI report.

## Claims

1. A communication apparatus for use in a radio communication system having plural communication channels on a frequency domain, the communication apparatus comprising:
an ACK/NACK generating unit that generates an ACK or a NACK based on a result of decoding of a received signal;
a quality-information organizing unit that accumulates a channel quality obtained by a predetermined measuring process, of each of the communication channels, and outputs a CQI in timing of an ACK or an NACK output by the ACK/NACK generating unit; and
a transmitting unit that receives a CQI from the quality-information organizing unit and receives an ACK or an NACK from the ACK/NACK generating unit, and transmits the CQI and the ACK or the NACK through same communication channel.

2. The communication apparatus according to claim 1, wherein the quality-information organizing unit reports higher N (N is an arbitrary natural number) communication channels having highest channel qualities as the CQI, at a time when the ACK/NACK generating unit outputs an ACK or an NACK.

3. The communication apparatus according to claim 1, wherein the quality-information organizing unit reports channel qualities of N (N is an arbitrary natural number) different communication channels as the CQI, in each timing of an ACK or an NACK output by the ACK/NACK generating unit, and repeatedly provides the report of the channel qualities of N communication channels, thereby providing CQI reporting of all the communication channels.

4. A communication apparatus for use in a radio communication system having plural communication channels on a frequency domain, the communication apparatus comprising:
an ACK/NACK generating unit that generates an ACK or an NACK based on a result of decoding of a received signal;
a quality-information organizing unit that accumulates a channel quality obtained by a predetermined measuring process, of each of the communication channels, and outputs a CQI in timing of an NACK output by the ACK/NACK generating unit; and
a transmitting unit that receives a CQI from the quality-information organizing unit and an NACK from the ACK/NACK generating unit, and transmits the CQI and the NACK through same communication channel.

5. The communication apparatus according to claim 4, wherein the quality-information organizing unit reports higher N (N is an arbitrary natural number) channels having highest channel qualities as the CQI, at a time when the ACK/NACK generating unit outputs an NACK.

6. The communication apparatus according to claim 1, wherein the quality-information organizing unit reports higher N (N is an arbitrary natural number) communication channels having highest channel qualities, and reports an average of qualities of an (N+1)th communication channel and communication channels having lower qualities, as the CQI, at a time when the ACK/NACK generating unit outputs an ACK or an NACK.

7. A radio communication system that is compatible with plural communication channels on a frequency domain, the radio communication system comprising:
at least one terminal including an ACK/NACK generating unit that generates an ACK or a NACK based on a result of decoding of a received signal; a quality-information organizing unit that accumulates a channel quality obtained by a predetermined measuring process, of each of the communication channels, and outputs a CQI in timing of an ACK or an NACK output by the ACK/NACK generating unit; and
a transmitting unit that receives a CQI from the quality-information organizing unit and receives an ACK or an NACK from the ACK/NACK generating unit, and transmits the CQI and the ACK or the NACK through same communication channel; and
a base station that schedules the communication channels based on a CQI obtained as a result of decoding of a radio signal transmitted from the terminal.

8. The communication apparatus according to claim 7, wherein the quality-information organizing unit reports higher N (N is an arbitrary natural number) communication channels having highest channel qualities as the CQI, at a time when the ACK/NACK generating unit outputs an ACK or an NACK.

9. The communication apparatus according to claim 7, wherein the quality-information organizing unit reports channel qualities of N (N is an arbitrary natural number) different communication channels as the CQI, in each timing of an ACK or an NACK output by the ACK/NACK generating unit, and repeatedly provides the report of the channel qualities of N communication channels, thereby providing CQI reporting of all the communication channels.

10. A radio communication system that is compatible with plural communication channels on a frequency domain, the radio communication system comprising:
at least one terminal including an ACK/NACK generating unit that generates an ACK or an NACK based on a result of decoding of a received signal; a quality-information organizing unit that accumulates a channel quality obtained by a predetermined measuring process, of each of the communication channels, and outputs a CQI in timing of an NACK output by the ACK/NACK generating unit; and a transmitting unit that receives a CQI from the quality-information organizing unit and an NACK from the ACK/NACK generating unit, and transmits the CQI and the NACK through same communication channel; and
a base station that schedules the communication channels based on a CQI obtained as a result of decoding of a radio signal transmitted from the terminal.

11. The communication apparatus according to claim 7, wherein the quality-information organizing unit reports higher N (N is an arbitrary natural number) communication channels having highest channel qualities, and reports an average of qualities of an (N+1)th communication channel and communication channels having lower qualities, as the CQI, at a time when the ACK/NACK generating unit outputs an ACK or an NACK.

12. The radio communication system according to claim 10, wherein the quality-information organizing unit reports higher N (N is an arbitrary natural number) channels having highest channel qualities as the CQI, at a time when the ACK/NACK generating unit outputs an NACK.

13. A radio communication method performed when a terminal reports a CQI to a base station in a radio communication system that has plural communication channels on a frequency domain, the radio communication method comprising:
a channel-quality accumulating step of accumulating a channel quality obtained by a predetermined measuring process, of each of the communication channels; and
a transmitting step of transmitting through same communication channel a CQI generated based on the accumulated channel qualities and an ACK or an NACK generated based on a result of decoding of a received signal.

14. A radio communication method performed when a terminal provides CQI reporting to a base station in a radio communication system that has plural communication channels on a frequency domain, the radio communication method comprising:
a channel-quality accumulating step of accumulating a channel quality obtained by a predetermined measuring process, of each of the communication channels; and
a transmitting step of transmitting through same communication channel a CQI generated based on the accumulated channel qualities and an NACK generated based on a result of decoding of a received signal.
